Europäisches Patentamt

European Patent Office

Office européen des brevets

(11) Publication number: **0 431 767 A1**

## (12) EUROPEAN PATENT APPLICATION

(21) Application number: 90312373.5

(51) Int. Cl.⁵: **B29C 47/52**

(22) Date of filing: **13.11.90**

(30) Priority: **13.11.89 US 435624**

(43) Date of publication of application:
**12.06.91 Bulletin 91/24**

(84) Designated Contracting States:
**AT BE CH DE DK ES FR GB GR IT LI LU NL SE**

(71) Applicant: **PERMIAN RESEARCH CORPORATION**
**3400 West Seventh Street**
**Big Spring, TX 79720(US)**

(72) Inventor: **Serpa, Roy**
**P.O. Box 1714**
**Midland, Texas 79702(US)**
Inventor: **Antrim, Richard A.**
**3400 West 7th Street**
**Big Spring Texas 79720(US)**

(74) Representative: **Carpmael, John William Maurice et al**
**CARPMAELS & RANSFORD 43 Bloomsbury Square**
**London, WC1A 2RA(GB)**

(54) Sequential rotary extrusion system.

(57) Apparatus and method are disclosed for plasticizing at least one polymeric resin and admixing such plasticized resin with other monomers, polymers, catalysts, fillers, pigments, compatibilizers, fibers, or the like, in a plurality of sequentially disposed rotary extruders (10). The devolatilization of plasticized polymeric materials in a sequential rotary extruder system is also disclosed.

FIG. 1

## SEQUENTIAL ROTARY EXTRUSION SYSTEM

### Technical Field

This invention relates to rotary extruders, and more particularly, to the use of sequentially positioned rotary extruders for adding other polymers, monomers, catalysts, compatibilizers, chemicals, fillers, fibers, pigments or other additives to a base material. Another aspect of the invention relates to the use of sequentially positioned rotary extruders for devolatilizing a plasticized polymeric material.

### Background Of The Invention

As used herein, the term "rotary extruder" refers to an extruder having a stationary barrel section with an eccentric bore and a rotor that comprises a substantially cylindrical plasticizing surface rotatably mounted within the bore. In typical operation, polymeric resin, typically in the form of pellets, flakes or powder, is introduced through a feed port into a clearance zone between the rotor and the interior surface of the barrel. Plasticized material exits the barrel and is then usually further pressurized by a melt pump or equivalent means and extruded through a die. Extruders of this general type, which differ substantially from conventional rotating screw-type extruders in their design and operation, have previously been disclosed, for example, in United States Patents 3,880,564; 4,012,477; 4,501,543; and 4,813,863.

Rotary extruders have some distinct advantages over conventional screw-type extruders. For example, the average residence time required to plasticize a polymer within a rotary extrduer is significantly less than that typically required to plasticize the same polymer in a conventional screw extruder, thereby minimizing the time during which the polymer is subjected to shear. This characteristic is particularly significant when processing some polymeric materials.

Notwithstanding the advantages of the rotary extruder that have already been recognized and appreciated, however, methods and apparatus are needed that broaden the capabilities of the rotary extruder, and more particularly, that facilitate the addition of other materials such as catalysts, compatibilizers, chemicals, fillers, fibers, pigments, or other additives, monomers or polymers to the plasticized melt. Methods and apparatus are also needed that will facilitate the removal of volatiles and entrapped air or moisture from polymeric materials when plasticized in a rotary extruder, and that will permit the extrusion of materials having a high volatile content that were not previously extrudable in like manner.

### Summary Of The Invention

According to one embodiment of the present invention, apparatus is disclosed that comprises a plurality of sequentially disposed rotary extruders, the first of said extruders being adapted to plasticize a polymeric base material, and at least one sequentially disposed rotary extruder being adapted to receive pressurized, plasticized melt from the first extruder and to combine that melt with other additives or reactants prior to discharging the combined extrudate to a melt pump and die.

According to another embodiment of the invention, apparatus is disclosed that comprises a plurality of sequentially disposed rotary extruders, the first of said extruders being adapted to plasticize a polymeric base material, and at least one sequentially disposed rotary extruder being adapted to receive pressurized, plasticized melt from the first extruder and to vent volatile matter, preferably under vacuum, from said plasticized melt prior to discharging the plasticized melt to a melt pump and die.

According to another embodiment of the invention, apparatus is provided that comprises a rotary extruder adapted to receive a plasticized polymeric feed.

According to another embodiment of the present invention, apparatus is disclosed that comprises a plurality of sequentially disposed rotary extruders, the first of said extruders being adapted to plasticize a polymeric base material, and at least one sequentially disposed rotary extruder being adapted to receive pressurized, plasticized melt from the first extruder and to combine that melt with monomer and catalyst to facilitate the polymerization of the monomer within the plasticized melt prior to discharging the combined extrudate to a melt pump and die.

According to another embodiment of the invention, a method is provided for producing thermoplastic melts containing at least one thermoplastic polymeric resin and such other additives as may be desired, said method comprising the steps of introduced into a first rotary extruder a particulate polymeric resin; plasticizing the polymeric resin within the first rotary extruder; discharging the plasticized polymeric resin from the first rotary extruder; increasing the pressure of the polymeric resin discharged from the first extruder; introducing the pressurized, plasticized polymeric resin into a second rotary extruder; introducing at least one additive into the plasticized polymeric resin for mixing within the second extruder; and thereafter discharging the polymeric mixture thereby produced from the second extruder.

According to another embodiment of the invention, a method is provided for devolatilizing thermoplastic melts containing at least one thermoplastic polymeric resin and such other additives as may be desired, said method comprising the steps of introducing into a first rotary extruder a particulate polymeric resin; plasticizing the polymeric resin within the first rotary extruder; discharging the plasticized polymeric resin from the first rotary extruder; increasing the pressure of the polymeric resin discharged from the first extruder; introducing the pressurized, plasticized polymeric resin into a second rotary extruder; venting volatile matter, preferably under vacuum, from the plasticized melt while within the second extruder; and thereafter discharging the devolatilized polymeric melt thereby produced from the second extruder.

Brief Description Of The Drawings

The apparatus and method of the invention are further described and explained in relation to the following figures of the drawings wherein:

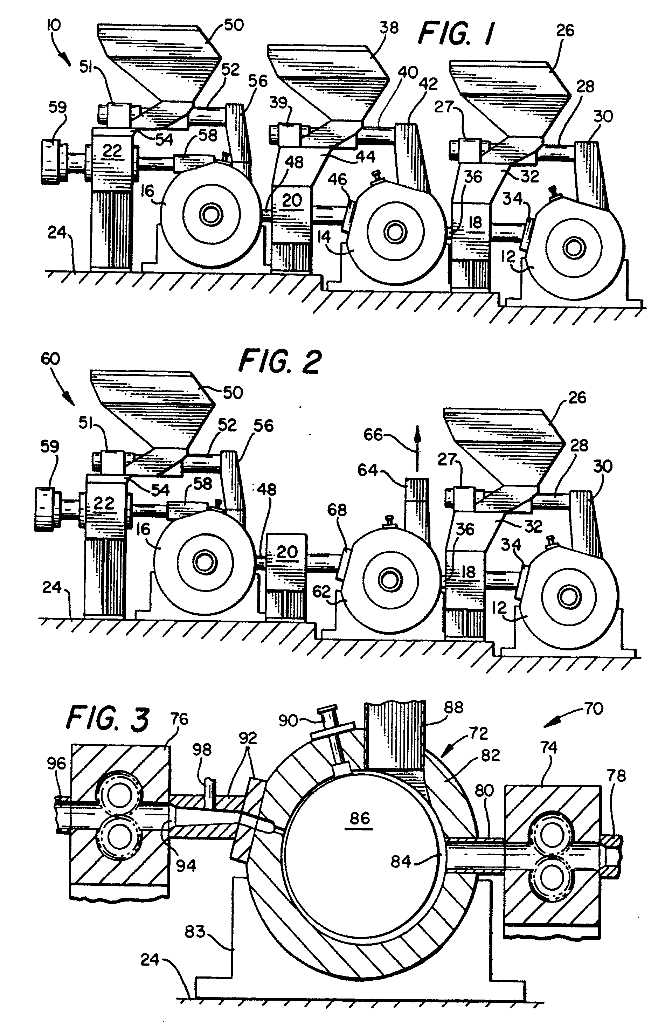

Figure 1 is a simplified side elevation view of an extruder line utilizing three rotary extruders in series with melt pumps disposed downstream of each extruder, with the first extruder being adapted to plasticize the base polymeric material and the second and third extruders being adapted to incorporate other additives or resins into the plasticized melt;

Figure 2 is a simplified side elevation view of an extruder line utilizing three rotary extrduers in series with melt pumps disposed downstream of each extruder, with the first extruder being adapted to plasticize the base polymeric material, the second extruder being adapted to devolatilize the plasticized melt received from the first extruder, and the third extruder being adapted to incorporate other additives or resins into the devolatilized plasticized melt; and

Figure 3 is a simplified section elevation view of a rotary extruder adapted to receive a plasticized polymeric feed in combination with melt pumps adapted to pressurize the plasticized feed being introduced into the rotary extruder and to pressurize the plasticized melt being discharged from the rotary extruder.

Like reference numerals are used to indicate like parts in all figures of the drawings.

Description Of The Preferred Embodiments

One preferred embodiment of the invention is disclosed in Figure 1, in which sequential rotary extrusion system 10 further comprises rotary extruders 12, 14, 16 with melt pumps 18, 20, 22, respectively, disposed downstream thereof. Referring to Figure 1, solid material preferably comprising a major portion of an extrudable plastic resin is supplied to hopper 26 in the form of pellets, granules or flakes. Such material is fed to feed chute 30 of rotary extruder 12 by feeder 28 driven by drive means 27. Feeder 28 can comprise a weight belt feeder, an auger, or another similarly effective means by which the rate that material is fed to rotary extruder 12 can be controlled. As shown in the drawings, hopper 26, feeder 28 and feeder drive means 27 are supported by brace member 32 above melt pump 18 to reduce the total space required for installation of the subject apparatus, although it is to be understood that other physical arrangements for supporting the hopper and feeder can likewise be used within the scope of the invention and may be preferable for other reasons such as ease of maintenance.

Material introduced into rotary extruder 12 through feed chute 30 is plasticized within the extruder and discharged through discharge assembly 34 into melt pump 18, preferably a gear pump, or other similarly effective means for further pressurizing the plasticized material.

The pressurized, plasticized material discharged from melt pump 18 is preferably introduced into rotary extruder 14 through inlet 36 at a point below, or downstream of, the point where feed chute 42 communicates with rotary extruder 14. Hopper 38, feed drive means 39 and feeder 40 are supported by brace member 44, and cooperate with feed chute 42 to introduce additional solid materials into rotary extruder 14, where they are mixed into the already plasticized material received through inlet 36. Additives that can be introduced into the plasticized melt in rotary extruder 14 can include, by way of example and without limitation, other polymers, monomers, catalysts, fillers, pigments, fibers, compatibilizers, or other additives known to those of ordinary skill in the art which are useful for the subsequent processing or use of extrudate. When monomer and catalyst are introduced into the plasticized melt through feed chute 42 of rotary extruder 14 or through feed chute 56 of rotary extruder 16, rotary extruders 14, 16, respectively, can function as reactors to polymerize the monomer provided that conditions within the rotary extruder are otherwise favorable to the reaction.

Plasticized polymeric material having the additives mixed therein is preferably discharged from extruder 14 through discharge assembly 42 into melt pump 20, or other similarly effective means for increasing the melt pressure prior to introducing such material into rotary extruder 16 through inlet 48.

Rotary extruder 16 is preferably adapted by means of hopper 50, feeder driver means 51, feeder 52, support member 54 and feed chute 56 to introduce other additives, if desired, into the melt received from extruder 14. Following such addition, if any, the melt exits rotary extruder 16 through discharge assembly 58, and is preferably further pressurized by melt pump 22 and forced through die 59 or some other downstream processing unit.

Although sequential rotary extrusion system 10 as shown in Figure 1 comprises three rotary extruders linked in series, it will be apparent to one of ordinary skill in the art upon reading this disclosure that, depending upon factors such as the type, number and properties of the resins or additives, two, three or more rotary extruders can be connected in series in accordance with the present invention to achieve particular results with respect to either process or product.

Referring to Figure 2, another preferred sequential rotary extrusion system 60 is shown that comprises primary rotary extruder 12, devolatilizing rotary extruder 62 and rotary extruder 16 in combination with with melt pumps 18, 20, 22, respectively, disposed downstream thereof. According to this embodiment of the invention, rotary extruders 12, 16 and their auxiliary equipment are preferably configured and utilized as previously described and explained in relation to Figure 1 above. In this embodiment, however, devolatilizing rotary extruder 62 is preferably disposed between rotary extruder 12 and rotary extruder 16 for use in removing entrapped air, moisture, or other volatile matter from the plasticized melt received from rotary extruder 12 and melt pump 18.

As shown in Figure 2, plasticized polymeric material is preferably introduced into rotary extruder 68 through inlet 36. Vent pipe 64 is preferably disposed above, or upstream of, the point where the plasticized polymeric material is introduced into rotary extruder 62, in the position where a feed chute would normally be if solid material were being introduced into the extruder. Vacuum means (not shown) can be used to pull a partial vacuum in the direction of arrow 66 and thereby enhance the removal of volatile matter from the plasticized melt in rotary extruder 62. After passing through rotary extruder 62, the devolatilized melt exits through discharge assembly 68.

Devolatilizing extruder 62 as shown in Figure 2 is preferably adapted and sized so as to increase the surface area of the stream of plasticized polymer passing therethrough, thereby facilitating the removal of volatiles. Other means for increasing the surface area of the melt stream or for reducing the pressure over the melt to aid the removal of volatile matter can be similarly utilized in series with a rotary extruder within the scope of the invention.

While sequential rotary extrusion system 60 is described herein in relation to a preferred embodiment having a devolatilizing rotary extruder connected in series between a primary plasticizing rotary extruder and a rotary extruder used to introduce additives into the polymeric melt, it will be understood and appreciated that other configurations can also be used in accordance with the present invention. In some circumstances, for example, it may be preferable to use a plasticizing rotary extruder and devolatilizing means without an additive extruder. Alternatively, it may be preferable to connect devolatilizing means downstream of an additive extruder, or between two additive extruders, or to connect two or more devolatilizing means in series in a sequential rotary extrusion system.

The introduction of a plasticized polymeric feed into a rotary extruder is further described and explained in relation to Figure 3. Referring to Figure 3, plasticized polymeric melt is preferably introduced into melt pump 74 through inlet 78, and is discharged from melt pump 74 under increased pressure into rotary extruder 72 through inlet 80.

Rotary extruder 72 preferably further comprises rotor 86, having a substantially cylindrical plasticizing surface, which is rotatably mounted within eccentric bore 84 of barrel 82. Polymeric material is carried in a counter-clockwise direction around the annulus between rotor 86 and barrel 82 through a generally decreasing annular space between the inlet and outlet. Adjustable restriction bar assembly 90 is adapted for use in controlling the back pressure within rotary extruder 72 as desired. When plasticized polymer is being introduced into rotary extruder 72 through inlet 80, chute 88 can be used for introducing additives, for venting volatile matter, or simultaneously for both purposes. The cut or configuration of barrel 72 can be modified to adjust the shear rate as desired for different polymers, or to reduce shear as solvent levels drop, or to sever the chains of two or more polymers to produce free radical ends which can recombine to form polymer alloys under circumstances such as a nitrogen environment.

While inlet 80 is depicted in simplified form in Figure 3, it is understood that the structure and configuration of inlet 80 can vary within the scope of the invention. Thus, for example, an inlet configuration comprising a plurality of smaller, spaced-apart apertures in place of a single large inlet can also be used within the scope of the invention. Similarly, other rheologically designed and constructed orifices may be preferred, depending upon operating conditions, the material involved, the intended purpose for the rotary extruder into which the plasticized material is being introduced, and the like.

The use of various inserts in either the inlet or outlet configuration of the rotary extruders or melt pumps may also be desirable to vary mixing, or to affect melt pressure, temperature or shear. Likewise, valves or other devices for controlling the flow of the plasticized melt can also be utilized in inlet or outlet lines within the scope of the invention and may be preferred in some circumstances.

Plasticized material is preferably discharged from rotary extruder 72 through discharge assembly 92 and is further pressurized by melt pump 76 prior to being directed to a die or other downstream processing through outlet 96. If desired, other polymers or additives can also be introduced into the plasticized melt through inlet 98 in discharge assembly 92 before flowing into melt pump 76 through passage 94. Melt pumps 74, 76 are preferably commercially available rotary gear pumps, although it is understood that other means for pressurizing the extrudate may be similarly effective.

Other alterations and modifications of the apparatus and method disclosed herein will become apparent to those of ordinary skill in the art upon reading this disclosure, and it is intended that the scope of the invention be limited only by the broadest interpretation of the appended claims to which the inventors may be legally entitled.

**Claims**

1. A sequential rotary extrusion system comprising a first rotary extruder (12) adapted to plasticise a polymeric base material and at least one other serially connected rotary extruder (14; 16; 62) adapted to receive plasticised melt from said fist extruder and to combine said plasticised material with at least one other additive introduced through said serially connected rotary extruder.

2. The system of claim 1, further comprising at least one means (18; 20; 22) for increasing the pressure of the plasticised material discharged from at least one of said rotary extruders.

3. The system of claim 2, wherein said means for increasing the pressure of said plasticised material is a rotary gear pump.

4. The system of claim 1, wherein at least one serially connected means (62) downstream of said first rotary extruder is adapted to devolatise the plasticised material.

5. The system of claim 4 wherein said means is a rotary extruder.

6. A method for producing thermoplastic melts containing at least one thermoplastic polymeric resin and at least one other additive, said method comprising the steps of:
introducing into a first rotary extruder (12) a particulate thermoplastic resin;
introducing a particulate thermoplastic resin into a sequential rotary extrusion system comprising a first rotary extruder (12) adapted to plasticise said polymeric resin and at least one other serially connected rotary extruder (14; 16; 62) adapted to receive said plasticised resin from said first extruder;
plasticising the thermoplastic resin within said first rotary extruder;
discharging the plasticised resin from said first rotary extruder;
increasing the pressure of the plasticised resin discharged from the first rotary extruder;
introducing the pressurized, plasticised resin into a second rotary extruder (14; 62);
introducing at least one additive into the plasticised resin for mixing within said second rotary extruder;
and thereafter discharging the polymeric mixture thereby produced from said second rotary extruder of said sequential rotary extrusion system.

7. The method of claim 6 wherein said additive is selected from the group consisting of other polymers, monomers, fillers, stabilisers, compatibilisers, pigments, fibers, catalysts, lubricants and antioxidants.

8. The method of claim 6, comprising the further step of reducing the volatile matter content of said plasticised material within said secondary rotary extruder (62).

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-1 393 036 (MOROZOV et al.) <br> * The whole document * | 1,2,3,6,7 | B 29 C 47/52 |
| A | DD-A-1 372 04 (O. REIMPELL) <br> * The whole document * | 1,6 | |
| A | US-A-3 607 124 (R. ZIPPEL) <br> * The whole document * | 1,6 | |
| A | US-A-3 841 814 (H. ECKHARDT) <br> * Column 5, lines 51-55 * | 4 | |
| | | | **TECHNICAL FIELDS SEARCHED (Int. Cl.5)** |
| | | | B 29 C <br> B 29 B <br> B 01 F |

The present search report has been drawn up for all claims

| Place of search | Date of completion of search | Examiner |
|---|---|---|
| The Hague | 01 March 91 | SOZZI R. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document